# EUROPEAN PATENT APPLICATION

(11) **EP 4 007 038 A1**
(43) Date of publication of application: **01.06.2022**
(21) Application number: 20934234.4
(22) Date of filing: 26.11.2020
(51) Int. Cl.: H01M 10/42, H01M 10/058, H01M 50/107

(54) **PIN-TYPE PACK ASSEMBLY FOR LITHIUM ION BATTERY**

(30) Priority: 30.09.2020 CN 202011059246; 30.09.2020 CN 202022202824 U
(71) Applicant: Tianjin Lishen Battery Joint-Stock Co., Ltd., Tianjin 300384 (CN)
(72) Inventor: YA, Yuanyuan, Tianjin 300384 (CN); WANG, Nianju, Tianjin 300384 (CN); JIA, Xueheng, Tianjin 300384 (CN); XU, Minghui, Tianjin 300384 (CN); MIAO, Dongfang, Tianjin 300384 (CN)
(74) Representative: Lermer, Christoph
(86) International application number: PCT/CN2020/131698
(87) International publication number: WO 2022/068028

(57) **Abstract**

The disclosure provides a pin-type pack module for a lithium-ion battery. The pin-type pack module for a lithium-ion battery includes a housing including an axial through hole, and at least one integrated circuit device disposed in the axial through hole. When in use, the housing is partially or completely inserted into a central hole of an electrode assembly of the lithium-ion battery. The at least one integrated circuit device includes at least one access terminal and at least one output terminal; and a positive electrode and/or a negative electrode of the electrode assembly is conductively connected to the access terminal, for the polarity separation and power management of the lithium-ion battery.

## Description

### CROSS-REFERENCE TO RELATED APPLICATIONS

This application is a continuation-in-part of International Patent Application No. PCT/CN2020/131698 with an international filing date of Nov. 26, 2020, designating the United States, now pending, and further claims foreign priority benefits to Chinese Patent Application No. 202011059246.8 filed Sep. 30, 2020, and to Chinese Patent Application No. 202022202824.0 filed Sep. 30, 2020. The contents of all of the aforementioned applications, including any intervening amendments thereto, are incorporated herein by reference. Inquiries from the public to applicants or assignees concerning this document or the related applications should be directed to: Matthias Scholl P.C., Attn.: Dr. Matthias Scholl Esq., 245 First Street, 18th Floor, Cambridge, MA 02142.

### BACKGROUND

The disclosure relates to the field of structural design of a secondary battery, and more particularly, to a pin-type pack module for a lithium-ion battery.

A lithium-ion battery is a secondary battery and works based on lithium ions moving between the positive electrode and the negative electrode of the battery.

With the development of the battery production technology, the structure of the lithium-ion battery is improved over time. A conventional lithium-ion battery comprises a power management circuit configured to monitor battery capacity and prevent battery from being overcharged, overdischarged, and misuse at abnormal temperature. The power management circuit is separated from a cell and thus occupies a part of the battery, which reduces the space necessary for the cell and impacts the performance of the cell.

### SUMMARY

The disclosure provides a pin-type pack module for a lithium-ion battery, the pin-type pack module comprising:
a housing comprising an axial through hole, and when in use, the housing being partially or completely inserted into a central hole of an electrode assembly of the lithium-ion battery; and
at least one integrated circuit device disposed in the axial through hole, the at least one integrated circuit device comprising at least one access terminal and at least one output terminal; a positive electrode and/or a negative electrode of the electrode assembly being conductively connected to the access terminal, for the polarity separation and power management of the lithium-ion battery.

In a class of this embodiment, the at least one integrated circuit device comprises a protective part and a connection part.

In a class of this embodiment, the protective part comprises at least one of the following components:
an integrated circuit (IC) chip configured to monitor the voltage across and current through the battery in the closed loop;
a metal oxide semiconductor (MOS) switch disposed on a protection circuit board and configured to open and close the closed loop of the battery;
a resistor configured for voltage division and current limitation;
a capacitor configured to stabilize the voltage;
a negative temperature coefficient thermistor (NTC); and
a positive temperature coefficient thermistor (PTC).

In a class of this embodiment, the connection part comprises at least one of the following components: a printed circuit board (PCB), a flexible printed circuit (FPC), a connector, and a nickel tape.

In a class of this embodiment, the housing is used in combination with the battery housing; the battery housing is hermetically connected to the housing, thereby forming a ring-shaped sealed cavity to accommodate the electrode assembly.

Further, the housing has a longitudinal cross section in the shape of "┐┌", " 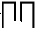 ", or "||".

In a class of this embodiment, the electrode assembly is a spiral-wound structure comprising the center hole.

In a class of this embodiment, an insulating part is loaded in the axial through hole to separate the at least one integrated circuit device from the housing.

In a class of this embodiment, the insulating part comprises an injection hole through which electrolyte is injected into the battery.

In a class of this embodiment, the housing is provided with or without an injection hole.

The following advantages are associated with the pin-type pack module of the disclosure. The integrated circuit device is disposed in the axial through hole of the housing of the pin-type pack module. The housing is partially or completely inserted into the central hole of the electrode assembly of the lithium-ion battery, thus saving the space. The positive electrode and/or the negative electrode of the electrode assembly is conductively connected to the access terminal of the integrated circuit device, and the output terminal of the integrated circuit device leaks out as an extraction electrode of the positive and/or negative electrode, achieving the polarity separation and power management of the lithium-ion battery.

### BRIEF DESCRIPTION OF THE DRAWINGS

FIG.**1** is a first schematic diagram of a pin-type pack module according to one embodiment of the disclosure;
FIG. **2** is a second schematic diagram of a pin-type pack module according to one embodiment of the disclosure;
FIG. **3** is a third schematic diagram of a pin-type pack module according to one embodiment of the disclosure; and
FIG. **4** is a fourth schematic diagram of a pin-type pack module according to one embodiment of the disclosure.

### DETAILED DESCRIPTION

To further illustrate the disclosure, embodiments detailing a pin-type pack module are described below. It should be noted that the following embodiments are intended to describe and not to limit the disclosure.

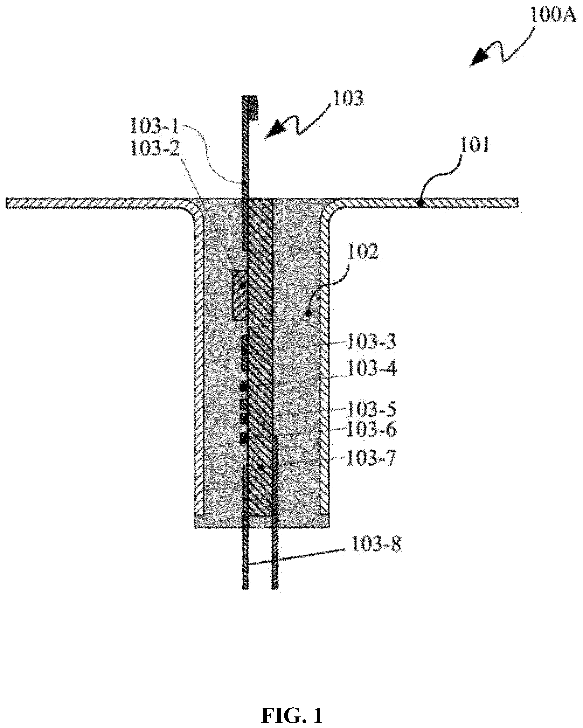

Referring to FIGS. 1, a pin-type pack module as shown in a first structure 100A comprises a housing 101 comprising an axial through hole. When in use, the housing 101 is partially or fully inserted into a center hole of an electrode assembly of a lithium-ion battery.

At least one integrated circuit device 103 is disposed in the axial through hole and configured to perform protection, management, and connection functions, so it is also called a power management unit. The at least one integrated circuit device comprises a FPC **103-1,** an IC chip **103-2,** a MOS switch **103-3,** a resistor **103-4,** a capacity **103-5,** a NTC **103-6,** a PCB **103-7,** and two tab adapters **103-8**. The at least one integrated circuit device optionally comprises a PTC and a thermal cutoff (TCO) switch.

The housing **101** has a longitudinal cross section in the shape of "┐┌", and correspondingly, the battery housing **300** has a longitudinal cross section in the shape of "U".

The battery housing **300** and the housing **101** are both an integrated structure, s integrally formed with the housing **101**, or both a splicing structure comprising a plurality of parts.

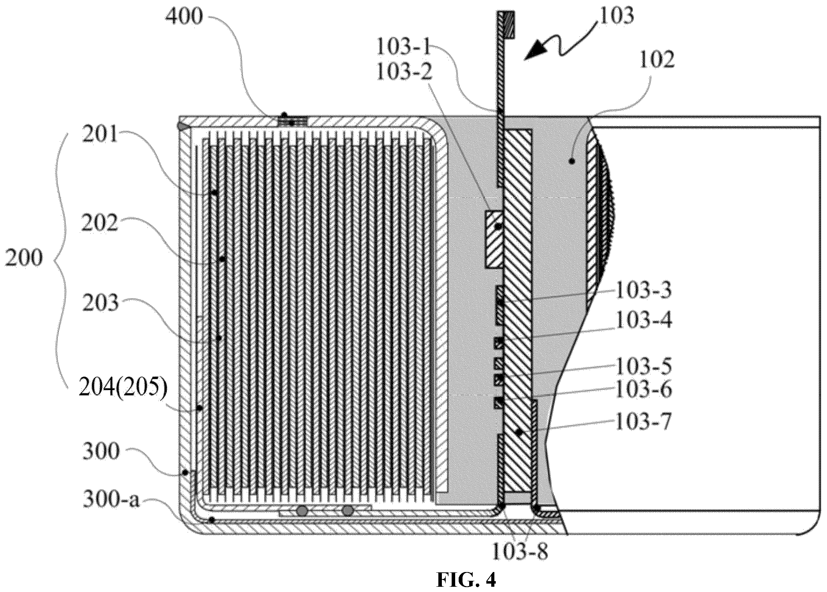

Referring to FIG. 4, the positive electrode **201** and the negative electrode **202** of the electrode assembly are conductively connected to the two tab adapters **103-8,** respectively, thereby protecting the battery.

The electrode assembly **200** further comprises a first transition conductor **204** and a second transition conductor **205** which are connected to the two tab adapters **103-8,** respectively. The other end of the first transition conductor **204** is connected to the positive electrode **201** and the other end of the second transition conductor is connected to the negative electrode **202.** Alternatively, the two tab adapters **103-8** are respectively connected to two thin copper/aluminum foils rather than to the first transition conductor **204** and the second transition conductor **205**.

The housing **101** is used in combination with the battery housing **300.** The battery housing is hermetically connected to the housing, thereby forming a ring-shaped sealed cavity to accommodate the electrode assembly.

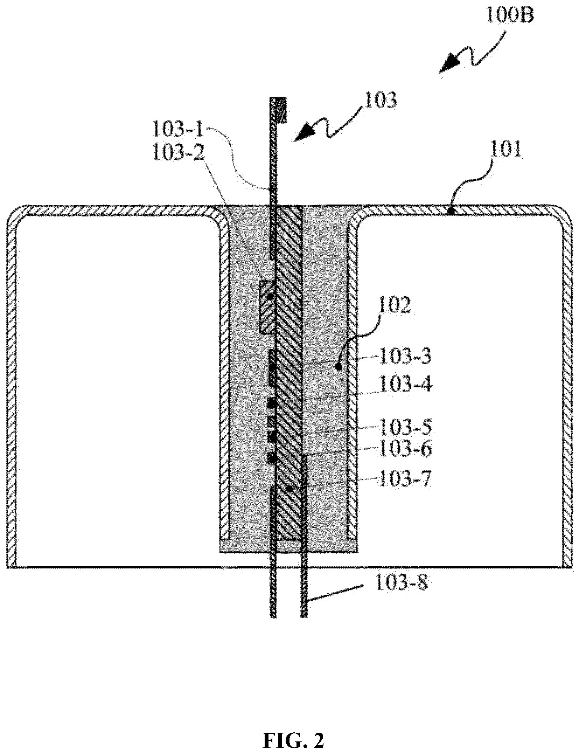

Referring to FIG. **2**, the pin-type pack module as shown in a second structure **100B** comprises a housing having a longitudinal cross section in the shape of " 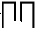 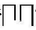 ", and correspondingly, the battery housing **300** has a longitudinal cross section in the shape of"-".

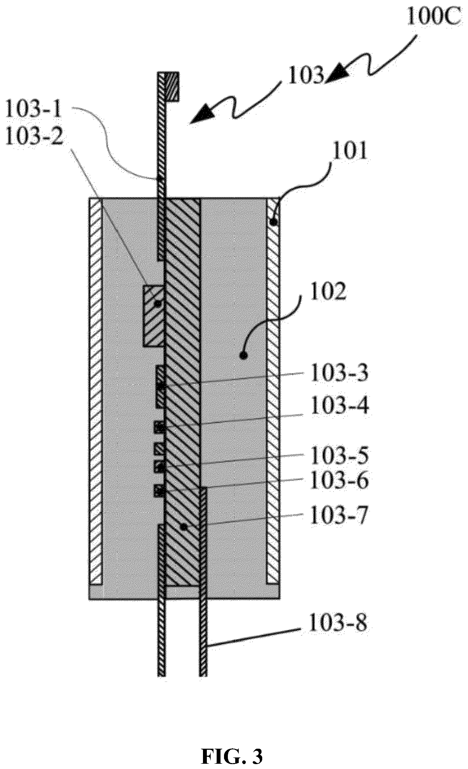

Referring to FIG. 3, the pin-type pack module as shown in a third structure **100C** comprises a housing **101** having a longitudinal cross section in the shape of "II" and correspondingly, the battery housing **300** has a longitudinal cross section in the shape of " 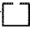 ".

An insulating part **102** is disposed in the axial through hole to separate the at least one integrated circuit device **103** from the housing **101.** The at least one integrated circuit device **103** penetrates through the insulating part **102.**

The insulating part **102** is in the shaped of " 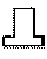 ". The upper portion of the insulating part is inserted into the axial through hole and the lower portion of the insulating part is configured to cover the axial through hole, thereby preventing contact of the assembly with the two tab adapters **103-8** and thus preventing a short circuit.

The insulating part **102** is in the shape of a cylinder, an "I", etc.

An insulating tape **300-a** is disposed inside the bottom end of the battery housing **300** to prevent the short circuit between the battery housing **300** and the two tab adapters **103-8,** and to prevent the short circuit occurring among the first transition conductor **204,** the second transition conductor **205**, and the battery housing **300.**

The electrode assembly **200** is a spiral-wound structure comprising the center hole and a diaphragm **203**. The positive electrode **201**, the negative electrode **202**, and the diaphragm **203** are spirally-wound around the center hole. The center hole has a diameter greater than 0 but smaller than that of the battery.

A liquid injection hole **400** is disposed on the battery housing **300**, the housing, or the insulating part.

Particularly, the pin-type pack module of the example is applicable to a cylindrical lithium-ion battery.

A method for assembling the pin-type pack module having the second structure **100B** is detailed as follows:

Polypropylene plastic is injected into the housing 101 by injection molding to form the insulating part 102, so that the PCB is fully wrapped. The FPC is partially wrapped and the other part of the FPC is extended out from the upper part of the housing to connect to the interfaces of the electronic components. The two tab adapters **103-8** are partially wrapped and the other parts of the two tab adapters **103-8** are conductively connected to the positive electrode and the negative electrode, respectively. The insulating part 102 is tightly attached to the inner wall of the housing 101.

A method for integrating the pin-type pack module and the battery housing of a battery module comprises:

The housing 101 of the pin-type pack module 100 is inserted into the center hole of the electrode assembly 200, and the two tab adapters **103-8** are bent outward and then connected to the first transition conductor 204 and the second transition conductor 205, respectively.

The pin-type pack module 100 is integrated with the electrode assembly 200 and then is disposed in the battery housing 300 containing the electrolyte. The pin-type pack module 100 is connected to the battery housing 300 through a laser soldering process, thereby forming a ring-shaped cavity to accommodate the electrode assembly 200.

It will be obvious to those skilled in the art that changes and modifications may be made, and therefore, the aim in the appended claims is to cover all such changes and modifications.

## Claims

1. A pin-type pack module for a lithium-ion battery, comprising:
a housing comprising an axial through hole, and when in use, the housing being partially or completely inserted into a central hole of an electrode assembly of the lithium-ion battery; and
at least one integrated circuit device disposed in the axial through hole, the at least one integrated circuit device comprising at least one access terminal and at least one output terminal; a positive electrode and/or a negative electrode of the electrode assembly being conductively connected to the access terminal, for the polarity separation and power management of the lithium-ion battery.

2. The module of claim 1, wherein the at least one integrated circuit device comprises a protective part and a connection part.

3. The module of claim 2, wherein the protective part comprises at least one of the following components:
an integrated circuit (IC) chip configured to monitor a voltage across and current through the battery in a closed loop;
a metal oxide semiconductor (MOS) switch disposed on a protection circuit board and configured to open and close the closed loop of the battery;
a resistor configured for voltage division and current limitation;
a capacitor configured to stabilize a voltage;
a negative temperature coefficient thermistor (NTC); and
a positive temperature coefficient thermistor (PTC).

4. The module of claim 2, wherein the connection part comprises at least one of the following components: a printed circuit board (PCB), a flexible printed circuit (FPC), a connector, and a nickel tape.

5. The module of claim 1, wherein the housing is used in combination with a battery housing; the battery housing is hermetically connected to the housing, thereby forming a ring-shaped sealed cavity to accommodate the electrode assembly.

6. The module of claim 5, wherein the housing has a longitudinal cross section in the shape of "┐┌", " 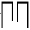 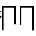 ", or "||".

7. The module of claim 1, wherein the electrode assembly is a spiral-wound structure comprising a center hole.

8. The module of claim 1, wherein an insulating part is loaded in the axial through hole to separate the at least one integrated circuit device from the housing.

9. The module of claim 1, wherein the insulating part comprises an injection hole.
